# EUROPÄISCHE PATENTANMELDUNG

(11) **EP 0 926 003 A2**
(43) Veröffentlichungstag der Anmeldung: **30.06.1999**
(21) Anmeldenummer: 98123644.1
(22) Anmeldetag: 10.12.1998
(51) Int. Cl.: B60Q 1/30

(54) **Signalleuchte für Fahrzeuge**

(30) Priorität: 24.12.1997 DE 19757927
(71) Anmelder: Hella KG Hueck & Co., 59552 Lippstadt (DE)
(72) Erfinder: Hesse, Konrad, 33142 Büren (DE)

(57) **Zusammenfassung**

Signalleuchte für Fahrzeuge mit einem langgestreckten Gehäuse, mit einer in das Gehäuse eingesetzten Trägerplatte mit Lichtquellen und mit einer die Lichtquellen abdeckenden Optikscheibe, wobei die Optikscheibe (3) fest mit dem Gehäuse (2) verbunden ist, daß die Optikscheibe (3) mindestens ein zum Gehäuse (2) hin abragendes Führungselement (8) aufweist, das zusammen mit einer gegenüberliegenden Führungsfläche (10) des Gehäuses (2) eine Führungsnut zum Einsetzen der Trägerplatte (9) bildet und daß ein Fixierelement (11) an der stirnseitigen Öffnung des Gehäuses (2) einsetzbar ist zur Fixierung der Trägerplatte (8) in der Führungsnut.

## Beschreibung

Die Erfindung betrifft eine Signalleuchte für Fahrzeuge mit einem langgestreckten Gehäuse, mit einer in das Gehäuse eingesetzten Trägerplatte mit Lichtquellen und mit einer die Lichtquellen abdeckenden Optikscheibe.

Aus der DE 40 03 807 C2 ist eine Signalleuchte für Fahrzeuge mit einem langgestreckten Gehäuse bekannt, das aus zwei jeweils rechtwinklig ausgebildeten Gehäuseteilen besteht. Die Gehäuseteile weisen jeweils federnde Rastelemente auf, die in entsprechende Rastöffnungen des anderen Teils in Eingriff gebracht werden zur Bildung des Gehäuses. Die beiden Gehäuseteile weisen jeweils an den gegenüberliegenden Seiten angeformte Haltenuten auf, in denen eine mit Lichtquellen bestückte Trägerplatte klemmend gehalten ist. Nachteilig an der bekannten Signalleuchte ist, daß zum Auswechseln einer Lichtquelle die Gehäuseteile voneinander getrennt werden müssen, damit die Trägerplatte entnommen werden kann.

Aus der DE 296 13 729 U1 ist eine Signalleuchte für Fahrzeuge mit einem langgestreckten Gehäuse bekannt, wobei die Trägerplatte an entsprechenden Anschlägen des Gehäuses durch Verrastung einer Optikscheibe klemmend an dem Gehäuse gehalten ist. Eine die Optikscheibe abdeckende Abschlußscheibe ist mittels Schweißen mit dem Gehäuse verbunden. Die bekannte Signalleuchte ist daher für ein Auswechseln der Trägerplatte bzw. der Lichtquellen nicht geeignet.

Aufgabe der Erfindung ist es daher, eine Signalleuchte für Fahrzeuge derart weiterzubilden, daß die Trägerplatte mit den Lichtquellen in dem Gehäuse lagesicher angeordnet ist und daß die Trägerplatte auf einfache Weise montiert bzw. demontiert werden kann.

Zur Lösung dieser Aufgabe ist die erfindungsgemäße Signalleuchte dadurch gekennzeichnet, daß die Optikscheibe fest mit dem Gehäuse verbunden ist, daß die Optikscheibe mindestens ein zum Gehäuse hin abragendes Führungselement aufweist, das zusammen mit einer gegenüberliegenden Führungsfläche des Gehäuses eine Führungsnut zum Einsetzen der Trägerplatte bildet und daß ein Fixierelement an der stirnseitigen Öffnung des Gehäuses einsetzbar ist zur Fixierung der Trägerplatte in der Führungsnut.

Der Vorteil der Erfindung besteht insbesondere darin, daß durch die unlösbare Verbindung der Optikscheibe mit dem Gehäuse eine definierte Führungsnut gebildet werden kann, die derart auf die Dicke der Trägerplatte abgestimmt ist, daß die Trägerplatte mit Spiel in die Führungsnut eingesetzt bzw. entnommen werden kann. Hierdurch wird eine einfache Montage bzw. Demontage der Trägerplatte durch Verschieben derselben in Längsrichtung ermöglicht. Das Anbringen eines Fixierelementes an der stirnseitigen Öffnung des Gehäuses, durch welches die Trägerplatte in der Verriegelungsposition lagesicher festgesetzt wird, gewährleistet eine klapperfreie Fixierung der Trägerplatte in dem Gehäuse.

Nach einer Weiterbildung der Erfindung sind die Führungselemente derart angeordnet, daß eine in Längsrichtung gekrümmte Führungsnut gebildet wird, so daß eine flexibel ausgebildete Trägerplatte nach dem Einsetzen in die Führungsnut lediglich mittels einer geringen Anpreßkraft unter Bildung einer Krümmung der Trägerplatte in dem Gehäuse eingespannt werden kann.

Nach einer Weiterbildung der Erfindung sind die Führungselemente der Optikscheibe als zwei zueinander parallel angeordnete, durchgängige und sich im wesentlichen über die gesamte Länge der Optikscheibe erstreckende Führungsstege ausgebildet, so daß eine gleichmäßige Führung der Trägerplatte beim Einsetzen in das Gehäuse gewährleistet ist.

Nach einer Weiterbildung der Erfindung ist das Fixierelement als Verschlußelement für die stirnseitige Öffnung des Gehäuses ausgebildet. Das Fixierelement weist somit eine Doppelfunktion auf. Zum einen dient es zum Fixieren der Trägerplatte in Längsrichtung derselben. Zum anderen dient es zum luftdichten Abschließen der Öffnung des Gehäuses, so daß keine Feuchtigkeit in das Gehäuse eindringen kann.

Nach einer Weiterbildung der Erfindung ist das Fixierelement als elastisches Verschlußelement ausgebildet, das umlaufende Rippen aufweist, die eine sichere formschlüssige Einfassung des Verschlußelements in der Öffnung ermöglichen. Die Rippen dienen als Widerhaken und legen das Verschlußelement fest in die Öffnung. Durch die Nachgiebigkeit des Verschlußelements werden überdies Fertigungstoleranzen der Trägerplatte ausgeglichen, so daß entsprechend der gewählten Beabstandung der Rippen zueinander eine vorgegebene Einspannung der Trägerplatte in dem Gehäuse gewährleistet werden kann.

Weitere Vorteile der Erfindung ergeben sich aus den weiteren Unteransprüchen.

Ein Ausführungsbeispiel der Erfindung wird nachfolgend anhand der Zeichnungen näher beschrieben.

Es zeigen:

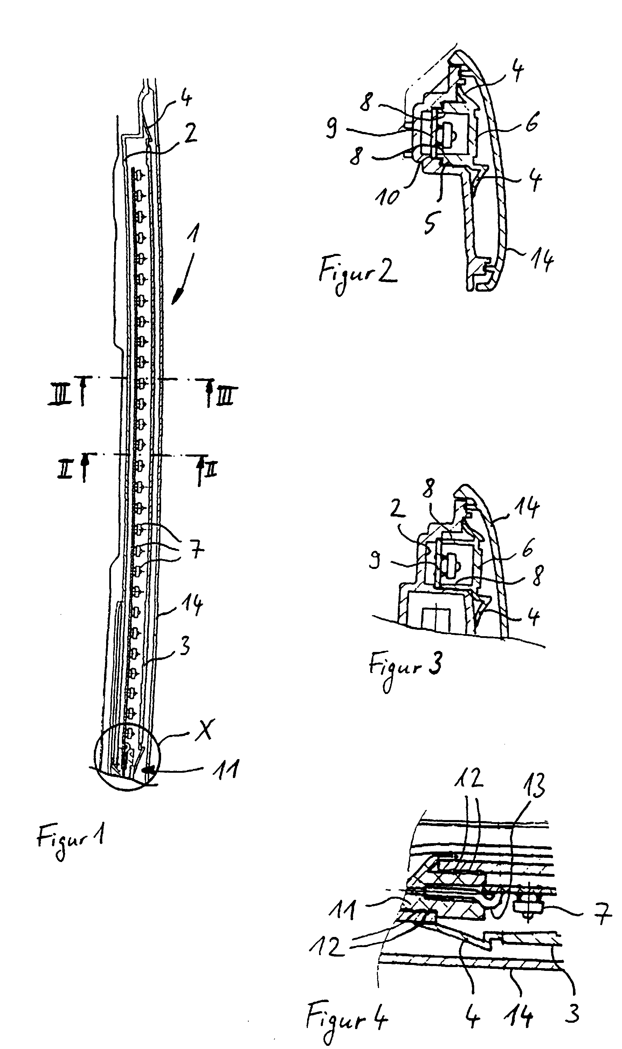

- Figur 1: einen horizontalen Längsschnitt durch eine Signalleuchte für Fahrzeuge,
- Figur 2: einen Schnitt entlang der Linie II-II in Figur 1,
- Figur 3: einen Schnitt entlang der Linie III-III in Figur 1 und
- Figur 4: einen vergrößerten Ausschnitt X aus Figur 1.

Die erfindungsgemäße Signalleuchte findet vorzugsweise Einsatz als zusätzliche Bremsleuchte für Kraftfahrzeuge. Dabei kann die Signalleuchte im Vergleich zu den restlichen Leuchten als hochgesetzte Bremsleuchte verwendet werden oder, wie im folgenden beschrieben, in einem mittleren Abschnitt einer Heckblende (1) eingefaßt sein, wobei in einem äußeren Abschnitt der Heckblende (1) weitere Leuchten eine Aufnahme finden.

Die Heckblende (1) weist in dem mittleren Abschnitt eine wannenförmige Gehäuseausnehmung (2) auf, die zur Ausbildung eines langgestreckten Gehäuses durch eine Optikscheibe (3) vollständig abgedeckt wird. Die Ausnehmung (2) ist vorzugsweise quaderförmig ausgebildet. Die starr ausgebildete Optikscheibe (3) weist randseitig umlaufende starre Randlappen (4) auf, die flächig auf einem korrespondierenden Abschnitt des Gehäuses anliegen. Längs der Optikscheibe (3) sind eine Anzahl von in die Gehäuseausnehmung (2) abragende Verbindungsstege (5) angeordnet, deren Enden mit der Wandung der Heckblende (1) durch Ultraschallschweißen fest verbunden werden. Zu diesem Zweck sind bereichsweise entsprechende senkrechte Erhebungen auf der Wandung der Ausnehmung (2) angeformt.

In einem zu den Randlappen (4) benachbarten Bereich der Optikscheibe (3) weist diese eine Vielzahl von Streuelementen (6) auf, die jeweils einer Lichtquelle (7) zugeordnet sind und eine vorgegebene Streuung des von der Lichtquelle (7) emittierten Lichtes bewirken. Diese Streuelemente (6) erstrecken sich in Längsrichtung eines mittleren Bereiches der Optikscheibe (3). In einem Bereich zwischen der Reihe von Streuelementen (6) einerseits und den sich in Längsrichtung erstreckenden Randlappen (4) andererseits sind in Längsrichtung jeweils durchgehende und zur Wandung der Gehäuseausnehmung (2) abragende Führungselemente als Führungsstege (8) angeordnet. Die Führungsstege (8) erstrecken sich im wesentlichen parallel zueinander. Die Verbindungsstege (5) sind außenseitig unmittelbar an den Führungsstegen (8) angeformt. Die Tiefe der Führungsstege (8) ist derart bemessen, daß im Bereich der Längsseiten der Gehäuseausnehmung (2) jeweils eine Führungsnut zur Aufnahme einer Trägerplatte (9) gebildet wird. Nach dem Verbinden der Optikscheibe (3) mit der Heckblende (1) weist die sich zwischen der Stirnseite des Führungsstegs (8) und einer Führungsfläche (10) der Gehäuseausnehmung (2) gebildete Führungsnut eine solche Breite auf, daß die mit einer Reihe von Lichtquellen (7) bestückte Trägerplatte (9) durch eine an der Stirnseite der Gehäuseausnehmung (2) angeordneten Öffnung mit Spiel eingesetzt werden kann.

Zur Fixierung der Trägerplatte (9) in der Gehäuseausnehmung (2) ist ein elastisches Verschlußelement (11) vorgesehen, das nach dem Einsetzen der Trägeplatte (9) formschlüssig in die stirnseitige Öffnung eingesetzt wird. Zur lagesicheren Einspannung der Trägerplatte (9) in der Gehäuseausnehmung (2) weist das Verschlußelement (11) zur Kontur der Öffnung korrespondierende Rippen (12) auf, die unter Anlage an der Innenseite des Öffnungsrandes nach dem Einpressen des Verschlußelements (11) in die Öffnung ein Zurückweichen des Verschlußelementes (11) verhindern. Die Rippen (12) erstrecken sich als quer zur Einsetzrichtung verlaufende umlaufende Rippen (12), die lappenartig an der Wandung der Gehäuseausnehmung (2) anliegen bzw. als Widerhaken innenseitig am Rand der Öffnung angeordnet sind.

Das Verschlußelement (11) weist eine axial verlaufende Bohrung auf zur Aufnahme einer elektrischen Leitung (13), die sich von einer nicht dargestellten Spannungsquelle zu Spannungsversorgungsanschlüssen auf der Trägerplatte (9) erstreckt.

Sowohl die Gehäuseausnehmung (2) als auch die Optikscheibe (3) weisen in Längsrichtung eine Krümmung auf, so daß eine gekrümmte Führungsnut konstanter Breite gebildet wird. Dadurch, daß die Trägerplatte (9) aus einem flexiblen Schaltungsplattenmaterial besteht, wird die Trägerplatte (9) beim Einsetzen in die Gehäuseausnehmung (2) entsprechend der Krümmung der Führungsnut verbogen. Zur Vereinfachung des Einschiebens in die Führungsnut weisen die Führungsstege (8) jeweils an einem der Öffnung der Gehäuseausnehmung (2) zugewandten Ende eine Schrägfläche auf, so daß die längsseitigen Randbereiche der Trägerplatte (9) in die Führungsnut geführt werden.

Durch das Vorsehen der Öffnung der Gehäuseausnehmung (2) auf einer dem Innern der Heckblende (1) zugewandten Seite kann die Trägerplatte (9) zusammen mit den Lichtquellen (7) montiert bzw. demontiert werden, ohne daß die Optikscheibe (3) und eine die Optikscheibe (3) abdeckende Abschlußscheibe (14) von der Heckblende, (1) entfernt werden müßten. Das Erscheinungsbild der Heckblende (1) wird durch die Positionierung der Öffnung nicht beinträchtigt. Die Abschlußscheibe (14) ist randseitig mit der Heckblende (1) durch Verschweißen verbunden. Die Trägerplatte (9) ist als Leiterplatte ausgebildet, die mit einer Mehrzahl von Leuchtdioden (LED) bestückt ist. Die Trägerplatte (9) ist durch die Lage in der Führungsnut von einer gegenüberliegenden Wandung der Gehäuseausnehmung (2) beabstandet. Die Optikscheibe (3) und die Abschlußscheibe (14) sind jeweils aus einem transparenten Kunststoffmaterial, insbesondere PMMA, geformt. Das Verschlußelement (11) besteht vorzugsweise aus Silikongummi.

## Patentansprüche

1. Signalleuchte für Fahrzeuge mit einem langgestreckten Gehäuse, mit einer in das Gehäuse eingesetzten Trägerplatte mit Lichtquellen und mit einer die Lichtquellen abdeckenden Optikscheibe, dadurch gekennzeichnet, daß die Optikscheibe (3) fest mit dem Gehäuse (2) verbunden ist, daß die Optikscheibe (3) mindestens ein zum Gehäuse (2) hin abragendes Führungselement (8) aufweist, das zusammen mit einer gegenüberliegenden Führungsfläche (10) des Gehäuses (2) eine Führungsnut zum Einsetzen der Trägerplatte (9) bildet und daß ein Fixierelement (11) an der stirnseitigen Öffnung des Gehäuses (2) einsetzbar ist zur Fixierung der Trägerplatte (8) in der Führungsnut.

2. Signalleuchte nach Anspruch 1, dadurch gekennzeichnet, daß die Trägerplatte (9) flexibel ausgebildet ist und daß die Führungselemente (8) in Längsrichtung des Gehäuses (2) derart ausgebildet sind, daß eine gekrümmte Führungsnut gebildet wird.

3. Signalleuchte nach Anspruch 1 oder 2, dadurch gekennzeichnet, daß das Gehäuse (2) derart geformt ist, daß die Führungsfläche (10) einen konstanten Abstand zu dem korrespondierenden Führungselement (8) aufweist.

4. Signalleuchte nach einem der Ansprüche 1 bis 3, dadurch gekennzeichnet, daß die Führungselemente der Optikscheibe (3) als zwei parallele, sich im wesentlichen über die gesamte Länge der Optikscheibe (3) erstreckende Führungsstege (8) ausgebildet sind.

5. Signalleuchte nach einem der Ansprüche 1 bis 4, dadurch gekennzeichnet, daß das Fixierelement als Verschlußelement (11) formschlüssig in der Öffnung des Gehäuses (2) gehalten ist.

6. Signalleuchte nach Anspruch 5, dadurch gekennzeichnet, daß das Fixierelement als elastisches Verschlußelement (11) ausgebildet ist mit umlaufenden Rippen (12) zur verspannenden Fixierung der Trägerplatte (9) in einer Ausnehmung des Gehäuses (2).

7. Signalleuchte nach einem der Ansprüche 1 bis 6, dadurch gekennzeichnet, daß das Führungselement (8) an einem der Öffnung zugewandten Ende eine Schrägfläche aufweist.

8. Signalleuchte nach einem der Ansprüche 1 bis 7, dadurch gekennzeichnet, daß die Optikscheibe (3) in einem Bereich von Randlappen (4) Verbindungsstege (5) aufweist, die durch Ultraschallschweißen fest mit dem Gehäuse (2) verbunden sind.

9. Signalleuchte nach einem der Ansprüche 1 bis 8, dadurch gekennzeichnet, daß die Trägerplatte (9) als Leiterplatte mit einer Anzahl von in Längsrichtung derselben sich erstreckenden Leuchtdioden (7) ausgebildet ist.
